# EUROPEAN PATENT SPECIFICATION

(11) **EP 0 535 870 B1**
(45) Date of publication and mention of the grant of the patent: **25.01.1995**
(21) Application number: 92308743.1
(22) Date of filing: 25.09.1992
(51) Int. Cl.: H01S 3/038, H01J 1/16

(54) **Directly heated dispenser cathode with improved helix element and rare gas ion laser generating system using the same**
Direkt geheizte dispensierende Kathode mit verbessertem schraubenförmigen Element und Edelgas-Ionen-Lasersystem mit einer solchen Kathode
Cathode dispensatrice chauffée directement ayant un élément hélicoidal amélioré et système générateur laser ionique à gaz noble utilisant une telle cathode

(30) Priority: 30.09.1991 JP 78883/91
(43) Date of publication of application: 07.04.1993
(73) Proprietor: NEC CORPORATION, Tokyo (JP)
(72) Inventor: Seura, Ryoichi, c/o NEC Corporation, Tokyo 108-01 (JP)
(74) Representative: Abnett, Richard Charles

(56) References cited:
- US-A- 5 050 184
- MEASUREMENT SCIENCE & TECHNOLOGY vol. 1, no. 4,April 1990, BRISTOL pages 345 - 347 , XP000113750 M.STEFANOVA ET AL. 'PULSED He-Kr LASER WITH ELECTRODES OF HELICAL CONFIGURATION' 2. EXPERIMENTAL ARRANGEMENT

## Description

### FIELD OF THE INVENTION

This invention relates to a directly heated dispenser cathode and, more particularly, to the structure of a helical shaped directly heated dispenser cathode used in a rare gas ion laser generating system.

### DESCRIPTION OF THE RELATED ART

The directly heated dispenser cathode allows a large amount of current to flow therethrough rather than an oxide coated cathode, and provides prolonged service time period. Other attractive features of the directly heated dispenser cathode are resistivities against ion-impact and arc discharge. For this reason, the directly heated dispenser cathode is used in high-power laser tubes.

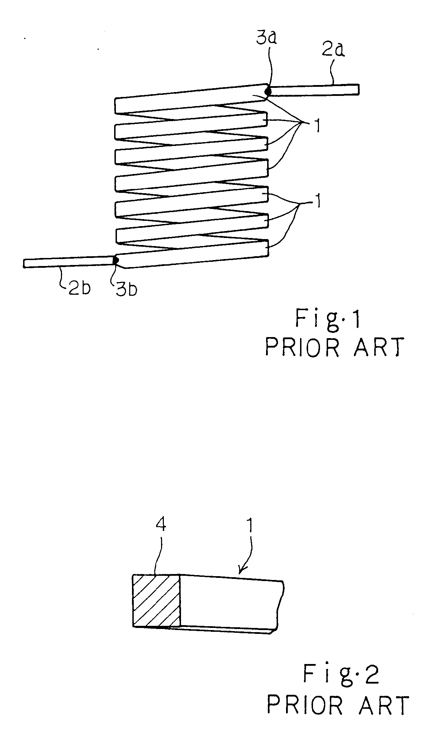

Fig. 1 shows a typical example of the directly heated dispenser cathode used in the prior art high-power laser tube (see e.g. US-A-5 050 184). The prior art directly heated dispenser cathode is shaped into a helix, and the helix consists of a plurality of helical elements 1 merged into one another. The outermost helical elements are welded or brazed to lead wires 2a and 2b, and the welded spots are represented by dots 3a and 3b in Fig. 1. The cross section 4 of each helical element 1 is generally rectangular as shown in Fig. 2, and is uniform over the helix. The helix is formed of sintered tungsten, and the sintered tungsten is impregnated with electron emitting substance such as mixture of barium oxide (BaO), calcium oxide (CaO) and aluminum oxide (Al₂O₃). When current flows through the helix, the electron emitting substance is heated, and electrons are radiated therefrom.

The prior art directly heated dispenser cathode is fabricated through the following process sequence. The process sequence starts with preparation of tungsten powder, and the tungsten powder is pressed into a thick straight rod. The rod-shaped tungsten powder is sintered under appropriate conditions, and a porous sintered body is produced through the sintering process. The sintered body is, thereafter, infiltrated with inert plastic filler, and the inert plastic filler enhances the machinability of the sintered body. Then, the rod-shaped sintered body thus infiltrated with the inert plastic filler is machined into the helix, and the inert plastic filler is removed in vacuum or air. The lead wires 2a and 2b are welded at the spots 3a and 3b to the outermost helical elements, respectively, and the sintered body is covered with powder of the electron emitting substance. The powder of the electron emitting substance is heated over a certain temperature in vacuum or hydrogen atmosphere, and the powder of the electron emitting substance is melted so as to impregnate into the sintered body.

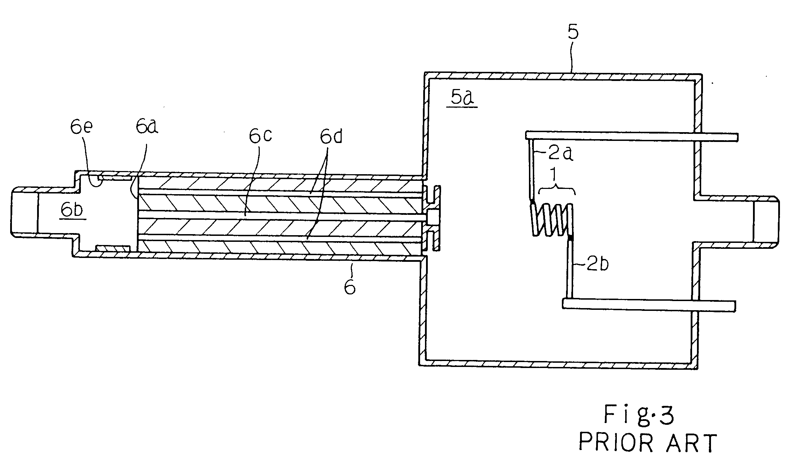

The prior art directly heated dispenser cathode thus fabricated is installed in an argon gas ion laser generating system as shown in Fig. 3. The argon gas ion laser generating system comprises a cathode tube 5, and a laser capillary 6 projecting from the cathode tube 5. A cathode chamber 5a is defined in the cathode tube 5, and the prior art directly heated dispenser cathode is accommodated in the cathode chamber 5a. A partition member 6a is inserted into the laser capillary 6, and separates an anode chamber 6b from the cathode chamber 5a. A through-hole 6c and gas return paths 6d are formed in the partition member 6a, and an anode 6e is provided in the anode chamber 6b.

The argon gas ion laser generating system thus constructed behaves as follows. First, the cathode and anode chambers 5a and 6b are evacuated, and vacuum is developed in those chambers. When current is supplied to the prior art directly heated dispenser cathode, the helical elements 1 are heated to a certain temperature, and argon gas is introduced into the chambers 5a and 6b. Arc discharge takes place, and argon gas laser is produced in the prior art argon gas ion laser generating system.

However, a problem is encountered in the prior art directly heated dispenser cathode in relatively short service time period. This is because of the fact that argon ion damages the surface of the porous sintered body, and the electrons are hardly emitted due to melted sintered substance covering the porous surfaces of the helical elements. The service time period of the directly heated dispenser cathode is inversely proportional to the discharge current. In fact, while the current is about 6 amperes, the service time period is of the order of ten thousand hours. However, if the current is increased to 10 amperes, the prior art directly heated dispenser cathode serves over only five hundred hours.

### SUMMARY OF THE INVENTION

It is therefore an important object of the present invention to provide a directly heated dispenser cathode which serves over prolonged time period.

The present inventor discovers that only one or two helical elements on the anode side are rapidly damaged, and the damage proceeds to the rear helical elements.

In accordance with one aspect of the present invention, there is provided a directly heated dispenser cathode comprising: a) a helix member formed of porous sintered substance impregnated with electron emitting substance, and having a plurality of helical elements merged into one another and broken down into a first group faced to an anode and a second group on the opposite side to the anode, a flange projecting from the outermost helical element of the first group in such a manner as to face to the anode; b) a first lead wire coupled with the outermost helical element of the first group; and c) a second lead wire coupled with the outermost helical element of the second group.

In accordance with another aspect of the present invention, there is provided a rare gas ion laser generating system comprising: a) a first tube member having an anode chamber; b) an anode provided in the anode chamber; c) a second tube member having a cathode chamber connected with the anode chamber; and d) a directly heated dispenser cathode provided in the cathode chamber, and comprising d-1) a plurality of helical elements formed of porous sintered substance impregnated with electron emitting substance, and having the plurality of helical elements merged into one another and broken down into a first group faced to the anode and a second group on the opposite side to the anode, a flange projecting from the outermost helical element in such a manner as to face to the anode, d-2) a first lead wire coupled with the outermost helical element of the first group, and d-3) a second lead wire coupled with the outermost helical element of the second group.

### BRIEF DESCRIPTION OF THE DRAWINGS

The features and advantages of the directly heated dispenser cathode according to the present invention will be more clearly understood from the following description taken in conjunction with the accompanying drawings in which:
Fig. 1 is a side view showing the structure of the prior art directly heated dispenser cathode;
Fig. 2 is a cross sectional view showing the helical component of the prior art directly heated dispenser cathode;
Fig. 3 is a cross sectional view showing the structure of the prior art rare gas ion laser generating system;
Fig. 4 is a cross sectional view showing the structure of a rare gas ion laser generating system according to the present invention;
Fig. 5 is a side view showing the structure of a directly heated dispenser cathode according to the present invention;
Fig. 6 is a cross sectional view showing the structure of a helix element of the directly heated dispenser cathode; and
Fig. 7 is a side view showing the structure of another directly heated dispenser cathode according to the present invention.

### DESCRIPTION OF THE PREFERRED EMBODIMENTS

### First Embodiment

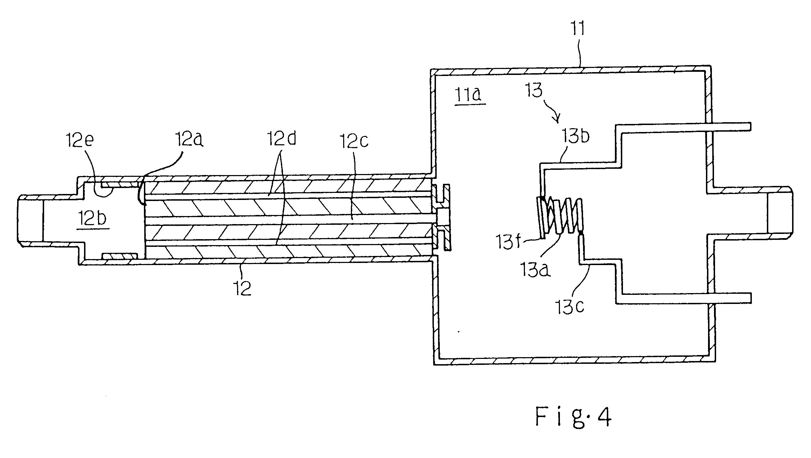

Referring to Fig. 4 of the drawings, a rare gas ion laser generating system embodying the present invention comprises a cathode tube 11, and a laser capillary 12 projecting from the cathode tube 11. A cathode chamber 11a is defined in the cathode tube 11, and a directly heated dispenser cathode 13 is accommodated in the cathode chamber 11a. A partition member 12a is inserted into the laser capillary 12, and separates an anode chamber 12b from the cathode chamber 11a. A through-hole 12c and gas return paths 12d are formed in the partition member 12a, and an anode 12e is provided in the anode chamber 12b.

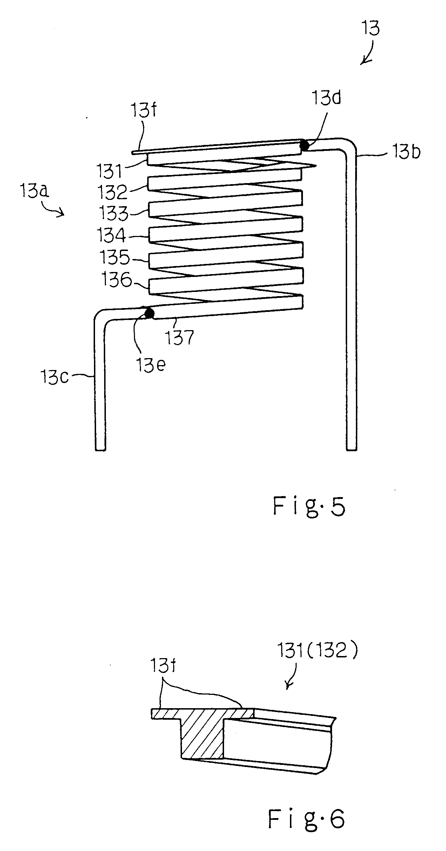

Turning to Fig. 5, the directly heated dispenser cathode 13 comprises a helix member 13a or helical elements 131 to 137 merged into one another, and lead wires 13b and 13c of molybdenum respectively arc-welded to the helical elements 131 and 137 at welded spots 13d and 13e. However, the lead wires may be brazed to the helix member 13a. The helix member 13a is formed of porous sintered tungsten, and electron emitting substance such as mixture of BaO, CaO and Al₂O₃ is impregnated into the porous sintered tungsten. A flange 13f projects from both sides of a part of the helix member 13a as shown in Fig. 6, and extends over the entire helical element 131 and a half of the next helical element 132. However, the remaining helical elements do not have any flange, and have a rectangular cross section. In this instance, the helical elements 131 and 132 belong to a first group, and the other helical elements 133 to 137 form in combination a second group.

The directly heated dispenser cathode 13 is fabricated through the following process sequence. The process sequence starts with preparation of tungsten powder, and the tungsten powder is pressed into a thick straight rod. The rod-shaped tungsten powder is sintered under appropriate conditions, and a porous sintered body is produced through the sintering process. The porous sintered body is, thereafter, infiltrated with inert plastic filler, and the inert plastic filler enhances the machinability of the sintered body. Then, the rod-shaped porous sintered body thus infiltrated with the inert plastic filler is machined into a generally helix configuration. Namely, the helical elements 131 and 132 are shaped into a rectangular cross section with the flange 13f, and the other helical elements 133 to 37 are shaped into the rectangular cross section. After the shaping, the inert plastic filler is removed in vacuum or air. The lead wires 13b and 13c are welded at the spots 3a and 3b to the outermost helical elements 131 and 137, respectively, and the porous sintered body is covered with powder of the electron emitting substance. The powder of the electron emitting substance is heated over a certain temperature in vacuum or hydrogen atmosphere, and the powder of the electron emitting substance is melted so as to impregnate into the sintered body.

The rare gas ion laser generating system thus constructed behaves as follows. First, the cathode and anode chambers 11a and 12b are evacuated, and vacuum is developed in those chambers. When current is supplied to the directly heated dispenser cathode 13, the helix 13a is heated to a certain temperature, and rare gas such as, for example, argon is introduced into the chambers 11a and 12b. Arc discharge takes place, and argon gas laser is produced in the rare gas ion laser generating system.

Since the flange 13f projecting from the helical elements 131 and 132 is effective against the ion bombardment, the helical elements 133 to 137 are less liable to be damaged. In fact, when the flange 13f is provided to 1.5 turns of the helical elements of the directly heated dispenser cathode with the outer diameter of 12.7 millimeters, the service time period is twice prolonged at discharge current of 10 amperes with respect to the prior art shown in Fig. 3, and the flange 13f is surely effective against the ion bombardment.

### Second Embodiment

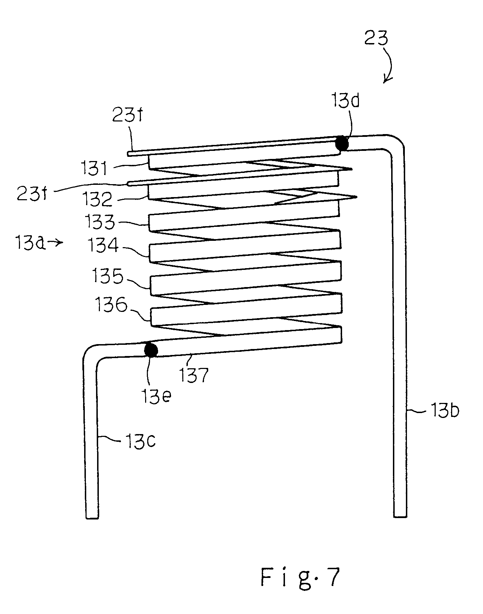

Turning to Fig. 7 of the drawings, another directly heated dispenser cathode 23 embodying the present invention is illustrated. The directly heated dispenser cathode is similar to the first embodiment except for a flange 23f projecting from the first and second helical elements 131 and 132 on the anode side. For this reason, components of the directly heated dispenser cathode 23 are labeled with the same references as those designating the corresponding elements of the first embodiment without detailed description.

The flange 23f is formed of tantalum, and is shaped into a ring. The ring-shaped flange 23f is laser welded to the entire periphery of the helical elements 131 and 132, and the other helical elements 133 to 137 are protected against ion bombardment by virtue of the protective flange 23f projecting from the first and second turns of the helix member 13a.

As will be understood from the foregoing description, the flange effectively protects the helical elements from the ion bombardment, and the directly heated dispenser cathode according to the present invention is improved in service time period.

Although particular embodiments of the present invention have been shown and described, it will be obvious to those skilled in the art that various changes and modifications may be made. For example, the directly heated dispenser cathodes according to the present invention are available for krypton ion laser generating systems. The flange may be brazed to the helical elements, and some helical elements may be directly machined so as to form flanges.

## Claims

1. A directly heated dispenser cathode (13; 23) comprising:
a) a helix member (13a) formed of porous sintered substance impregnated with electron emitting substance, and having a plurality of helical elements (131 to 137) merged into one another and broken down into a first group (131/132) faced to an anode (12e) and a second group (133 to 137) on the opposite side to said anode;
b) a first lead wire (13b) coupled with the outermost helical element (131) of said first group; and
c) a second lead wire (13c) coupled with the outermost helical element (137) of said second group,
characterized in that
a flange (13f; 23f) projects from said outermost helical element (131) of said first group in such a manner as to face to said anode.

2. A directly heated dispenser cathode as set forth in claim 1, in which said flange extends to the helical element (132) of said first group next to the outermost helical element.

3. A directly heated dispenser cathode as set forth in claim 2, in which said flange (23f) is formed from a ring-shaped tantalum member, and is welded to said outermost helical element (131) and to said helical element (132) next to said outermost helical element.

4. A directly heated dispenser cathode as set forth in claim 1, in which said directly heated dispenser cathode forms a rare gas ion laser generating system together with
a) a first tube member (12) having an anode chamber (12b),
b) an anode (12e) provided in said anode chamber, and c) a second tube member (11) having a cathode chamber (11a) connected with said anode chamber, and accommodating said directly heated dispenser cathode (13).

5. A rare gas ion laser generating system comprising:
a) a first tube member (12) having an anode chamber (12a);
b) an anode (12e) provided in the anode chamber; c) a second tube member (11) having a cathode chamber connected with the anode chamber; and d) a directly heated dispenser cathode (13) provided in the cathode chamber, and comprising d-1) a plurality of helical elements (131 - 137) formed of porous sintered substance impregnated with electron emitting substance, and having the plurality of helical elements merged into one another and broken down into a first group (131 - 132) faced to the anode and a second group (133 - 137) on the opposite side to the anode, d-2) a first lead wire (13b) coupled with the outermost helical element of the first group, and d-3) a second lead wire (13c) coupled with the outermost helical element of the second group, characterized by a flange (13f) projecting from the outermost helical element in such a manner as to face to the anode.

## Patentansprüche

1. Direkt geheizte Vorratskathode (13; 23) mit:
a) einem aus einer porösen gesinterten Substanz, die mit einer elektronenemittierenden Substanz getränkt ist, hergestellten Wendelelement (13a) mit mehreren miteinander verschmolzenen spiralförmigen Elementen (131 bis 137), die in eine zur Anode (12e) weisende erste Gruppe (131, 132) und eine von der Anode abgewandte zweite Gruppe (133 bis 137) unterteilt sind;
b) einem mit dem äußersten spiralförmigen Element (131) der ersten Gruppe verbundenen ersten Zuleitungsdraht (13b); und
c) einem mit dem äußersten spiralförmigen Element (137) der zweiten Gruppe verbundenen zweiten Zuleitungsdraht (13c),
**dadurch gekennzeichnet, daß**
ein Flansch (13f; 23f) vom äußersten spiralförmigen Element (131) der ersten Gruppe derart hervorsteht, daß er der Anode zugewandt ist.

2. Direkt geheizte Vorratskathode nach Anspruch 1, wobei der Flansch sich zum nach dem äußersten spiralförmigen Element angeordneten spiralförmigen Element (132) der ersten Gruppe erstreckt.

3. Direkt geheizte Vorratskathode nach Anspruch 2, wobei der Flansch (23f) aus einem ringförmigen Tantalelement hergestellt ist und am äußersten spiralförmigen Element (131) sowie am nach dem äußersten spiralförmigen Element angeordneten spiralförmigen Element (132) angeschweißt ist.

4. Direkt geheizte Vorratskathode nach Anspruch 1, wobei die direkt geheizte Vorratskathode zusammen mit a) einem ersten Rohrelement (12) mit einer Anodenkammer (12b), b) einer in der Anodenkammer angeordneten Anode (12e) und c) einem zweiten Rohrelement (11) mit einer mit der Anodenkammer verbundenen Kathodenkammer (11a), in der die direkt geheizte Vorratskathode (13) angeordnet ist, ein Edelgasionen-Lasererzeugungssystem bildet.

5. Edelgasionen-Lasererzeugungssystem mit:
a) einem ersten Rohrelement (12) mit einer Anodenkammer (12a), b) einer in der Anodenkammer angeordneten Anode (12e), c) einem zweiten Rohrelement (11) mit einer mit der Anodenkammer verbundenen Kathodenkammer und einer in der Kathodenkammer angeordneten direkt geheizten Vorratskathode mit: d-1) mehreren aus einer porösen gesinterten Substanz, die mit einer elektronenemittierenden Substanz getränkt ist, gebildeten spiralförmigen Elementen (131-137), wobei die mehreren spiralförmigen Elemente miteinander verschmolzen sind und in eine an der Anodenseite angeordnete erste Gruppe (131-132) und eine der Anode abgewandte zweite Gruppe (133-137) unterteilt sind, d-2) einem mit dem äußersten spiralförmigen Element der ersten Gruppe verbundenen ersten Zuleitungsdraht (13b) und d-3) einem mit dem äußersten spiralförmigen Element der zweiten Gruppe verbundenen zweiten Zuleitungsdraht (13c), gekennzeichnet durch einen Flansch (13f), der vom äußersten spiralförmigen Element derart hervorsteht, daß er der Anode zugewandt ist.

## Revendications

1. Cathode dispensatrice chauffée directement (13, 23) comprenant :
a) un élément d'hélice (13a) fait de substance frittée poreuse imprégnée d'une substance émettant des électrons, et ayant une pluralité d'éléments hélicoïdaux (131 à 137) se fondant les uns dans les autres et divisés en un premier groupe (131/132) disposé face à une anode (12e) et un second groupe (133 à 137) sur le côté opposé à ladite anode,
b) un premier câble de connexion (13b) relié à l'élément hélicoïdal le plus à l'extérieur (131) dudit premier groupe, et
c) un second câble de connexion (13c) relié à l'élément hélicoïdal le plus à l'extérieur (137) dudit second groupe,
caractérisé en ce que
une collerette (13f, 23f) dépasse dudit élément hélicoïdal le plus à l'extérieur (131) dudit premier groupe de manière à faire face à ladite anode.

2. Cathode dispensatrice chauffée directement selon la revendication 1, dans laquelle ladite collerette s'étend à l'élément hélicoïdal (132) dudit premier groupe suivant l'élément hélicoïdal le plus à l'extérieur.

3. Cathode dispensatrice chauffée directement selon la revendication 2, dans laquelle ladite collerette (23f) est formée d'un élément de tantale en forme de bague, et est soudée audit élément hélicoïdal le plus à l'extérieur (131) et audit élément hélicoïdal (132) suivant ledit élément hélicoïdal le plus à l'extérieur.

4. Cathode dispensatrice chauffée directement selon la revendication 1, dans laquelle la cathode dispensatrice chauffée directement forme un système générateur laser ionique à gaz rare en même temps que a) un premier élément de tube (12) ayant une chambre d'anode (12b), b) une anode (12e) prévue dans ladite chambre d'anode, et c) un second élément de tube (11) ayant une chambre de cathode (11a) en communication avec ladite chambre d'anode, et logeant ladite cathode dispensatrice chauffée directement (13).

5. Système générateur laser ionique à gaz rare comprenant : a) un premier élément de tube (12) ayant une chambre d'anode (12a), b) une anode (12e) prévue dans la chambre d'anode, c) un second élément de tube (11) ayant une chambre de cathode en communication avec la chambre d'anode, et d) une cathode dispensatrice chauffée directement (13) prévue dans la chambre de cathode, et comprenant d-1) une pluralité d'éléments hélicoïdaux (131 à 137) faits d'une substance frittée poreuse imprégnée d'une substance émettant des électrons, et ayant la pluralité d'éléments hélicoïdaux se fondant les uns dans les autres et divisés en un premier groupe (131 à 132) disposé face à l'anode et un second groupe (133 à 137) sur le côté opposé à l'anode, d-2) un premier câble de connexion (13b) relié à l'élément hélicoïdal le plus à l'extérieur du premier groupe, et d-3) un second câble de connexion (13c) relié à l'élément hélicoïdal le plus à l'extérieur du second groupe, caractérisé par une collerette (13f) dépassant à partir de l'élément hélicoïdal le plus à l'extérieur de manière à faire face à l'anode.
